(19) Europäisches Patentamt
European Patent Office
Office européen des brevets

(11) EP 0 889 580 A2

(12) # DEMANDE DE BREVET EUROPEEN

(43) Date de publication:
**07.01.1999 Bulletin 1999/01**

(51) Int Cl.[6]: **H02P 6/20**

(21) Numéro de dépôt: **98118221.5**

(22) Date de dépôt: **05.12.1995**

(84) Etats contractants désignés:
**AT BE CH DE DK ES FR GB GR IE IT LI LU MC NL PT SE**

(30) Priorité: **28.12.1994 US 365459**

(62) Numéro(s) de document de la (des) demande(s) initiale(s) en application de l'article 76 CBE:
**95938334.0 / 0 800 718**

(71) Demandeur: **HYDRO-QUEBEC**
**Montréal Québec H2Z 1A4 (CA)**

(72) Inventeurs:
- **Couture, Pierre**
  **Boucherville, Quebec J4B 4A4 (CA)**
- **Francoeur, Bruno**
  **Beloeil, Quebec J3G 6M1 (CA)**
- **Lambert, Ghislain**
  **Beloeil, Quebec J3G 6H5 (CA)**

(74) Mandataire: **Thébault, Jean-Louis**
**Cabinet Thébault**
**111 cours du Médoc**
**33300 Bordeaux (FR)**

Remarques:
Cette demande a été déposée le 25 - 09 - 1998 comme demande divisionnaire de la demande mentionnée sous le code INID 62.

(54) **Appareil et méthode pour démarrer une machine synchrone**

(57) L'invention a pour objet une méthode et un appareil pour démarrer une machine synchrone ayant un rotor (93) et un stator (92) muni d'enroulements. La méthode comprend les étapes suivantes (a) appliquer une séquence prédéterminée de sommes vectorielles de courants aux enroulements, la séquence de sommes vectorielles ayant des phases variables prédéterminées, (b) détecter et mémoriser, pour chacune des sommes vectorielles de courants appliquée à l'étape (a), un mouvement du rotor (93) et une direction de ce mouvement par rapport au stator (92), (c) établir une fonction F1 par rapport à la phase, basée sur les mouvements et les directions détectés à l'étape (b), et établir une fonction F2 par rapport à la phase, basée sur les amplitudes de la séquence de sommes vectorielles ; et (d) corréler mathématiquement une équation F résultant des fonctions F1 et F2 avec une équation prédéterminée pour obtenir une différence de phase, ainsi la machine (2) est maintenant prête à être mise en opération à partir de la différence de phase.

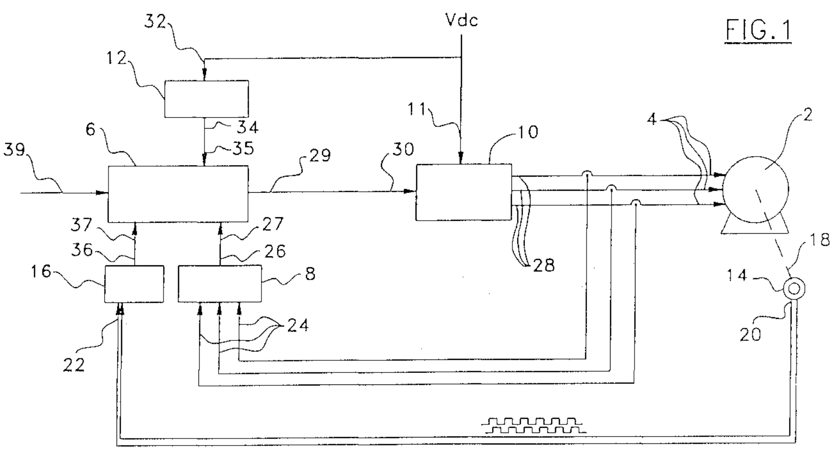


FIG. 1

EP 0 889 580 A2

## Description

Le domaine de l'invention:

La présente invention concerne une méthode et un appareil pour démarrer une machine à courant alternatif ayant un rotor et un stator muni d'enroulements.

Art antérieur:

Connu dans l'art antérieur, il y a la demande de brevet européen No. EP-A-0,571,076, dans laquelle sont décrits une méthode et un appareil pour démarrer une machine DC sans balais. La méthode utilisée est la suivante. On applique, dans un premier temps, un vecteur électrique au moteur dont la phase de ce vecteur sera incrémentée jusqu'à ce qu'elle atteigne la valeur prédéterminée ($+\Delta f$). On note la position finale ($C_1$) de déplacement du rotor. Dans un deuxième temps, on applique un vecteur électrique au moteur dont la phase de ce vecteur sera décrémentée jusqu'à ce qu'elle atteigne la valeur prédéterminée ($-\Delta f$). On note la position finale ($C_2$) de déplacement du rotor. De ces deux déplacements $C_1$ et $C_2$ on fait la moyenne afin d'obtenir la valeur de position de départ laquelle correspond à la superposition du vecteur pôle magnétique $\varphi$ et la force magnétomotrice I.

Cette méthode pour démarrer un moteur a un inconvénient important dû au fait qu'on doit déplacer de façon aléatoire le rotor à deux reprises avant le démarrage. Plus spécifiquement, cela pose un problème dans le cas où le moteur est relié à une lourde charge et qu'il n'est pas possible de permettre un mouvement aléatoire du rotor avant son démarrage.

Connu dans l'art, il y a aussi le brevet américain No. US-A-5,323,094, dans lequel sont décrits une méthode et un appareil pour démarrer une machine DC sans balais et sans senseur de position. La méthode utilisée consiste à faire tourner le rotor du moteur dans une direction désirée en appliquant une séquence de démarrage dans laquelle au moins deux des trois phases du stator sont énergisées pour produire un champ magnétique.

Comme dans le cas de la demande de brevet européen No. EP-A-0,571,076, cette méthode pour démarrer un moteur a un inconvénient important dû au fait qu'on doit déplacer de façon aléatoire le rotor avant le démarrage. Plus spécifiquement, cela pose un problème dans le cas où le moteur est relié à une lourde charge et qu'il n'est pas possible de permettre un mouvement aléatoire du rotor avant son démarrage.

Connu dans l'art antérieur, il y a le brevet américain No 5,221,881 de Scott W. CAMERON dans lequel est décrit un circuit pour faire fonctionner un moteur polyphasé à courant continu. Aux lignes 52 à 60 de la première colonne, il est mentionné, par exemple, que selon une façon largement répandue le moteur est démarré dans une position connue puis une information relative à la position instantanée ou courante du moteur est produite. Une façon de produire une telle information sur la position instantanée du moteur a été développée en utilisant le procédé de commutation du moteur, et implique l'identification de la bobine exploratrice et la mesure de sa force contre-électromotrice qui est la force contre-électromotrice induite dans le bobine lorsque celui-ci se déplace à travers le champ magnétique produit par le stator. Cette méthode pour démarrer un moteur a un inconvénient dû au fait qu'on doit connaître la position du rotor au moment du démarrage. Pour connaître cette position du rotor au moment du démarrage, celui-ci doit être déplacé de façon substantielle par rapport au stator de façon à ce que la force contre-électromotrice puisse être mesurée. Plus spécifiquement, cela pose un problème dans le cas où le moteur est relié à une lourde charge et qu'il n'est pas possible de permettre un mouvement substantiel aléatoire du rotor durant son démarrage.

Egalement connu dans l'art antérieur, il y a le brevet américain N° 4.814.677 de Allan B. PLUNKETT dans lequel est décrit un circuit de contrôle d'orientation de champ d'un moteur à aimant permanent. Aux lignes 22 à 29 de la colonne 7 de ce brevet, il est mentionné que l'amplitude du courant $I_a$ est suffisante pour provoquer un déplacement du rotor selon son alignement naturel lorsque le champ magnétique du stator est appliqué. Après l'application du courant $I_a$ pour une période de temps suffisante pour permettre un alignement du rotor, un convertisseur 37 est alimenté pour produire un courant en forme de rampe selon un axe $\beta$ ce qui produit une onde excitatrice de force magnétomotrice de rotation dans l'entrefer, produisant un couple amorçant une rotation du rotor. Encore une fois, l'inconvénient avec ce procédé est que lorsque le rotor est branché à une lourde charge, dans certaines occasions, il n'est pas possible de permettre un mouvement substantiel aléatoire du rotor durant un démarrage du moteur.

De plus, dans le brevet américain N° 4.748.387 de Jiro TANUMA et al., il y est décrit un appareil et une méthode pour contrôler la position de démarrage du rotor d'un moteur à courant continu sans collecteur. Aux lignes 4 à 15 de la troisième colonne, il est mentionné que la méthode comprend des étapes où, au moment du démarrage du moteur, on effectue une commutation du courant appliqué aux bobinages de l'armature pour les exciter selon plusieurs phases différentes pour ainsi localiser le rotor par rapport à une position angulaire de démarrage. Pour tenir compte de l'éventualité où le rotor soit positionné à la position angulaire de démarrage, on enlève la charge reliée du rotor, au moins avant que la dernière phase ne soit excitée, et on contrôle ensuite la force d'entraînement en rotation en comptant les impulsions de sortie du moyen pour mesurer la vitesse pour ainsi détecter la position angulaire du rotor. La direction de rotation du rotor est contrôlée à partir impulsions de sortie du moyen pour mesurer la vitesse et du comptage final de ces impulsions de sortie. Encore une fois, l'inconvénient avec cette méthode pour démarrer un moteur est que la charge reliée au rotor doit être enlevée durant l'opération de démarrage. Cette méthode ne permet pas un démarrage du moteur lorsque la charge est reliée au moteur.

Les documents suivants sont également connus dans l'art antérieur :

| | |
|---|---|
| 4.368.411 | KIDD |
| 4.409.530 | NEPER et al. |
| 4.429.262 | UTENICK |
| 4.546.293 | PETERSON et al. |
| 4.712.050 | NAGASAWA et al. |
| 5.162.709 | OHI |
| 5.194.794 | SHAMOTO |
| 5.204.604 | RADUN |
| 5.221.880 | BARTHOLOW et al. |

Aucun de ces brevets ne présente une méthode pour démarrer un moteur dans un cas où le moteur est branché à une lourde charge et qu'aucun mouvement aléatoire substantiel du moteur n'est permis.

Un objet de la présente invention est de proposer une méthode et un appareil pour démarrer une machine à courant alternatif ayant un rotor et un stator muni d'enroulements même dans le cas où le moteur est branché à une lourde charge.

Selon la présente invention, il est proposé une méthode pour démarrer une machine synchrone ayant un rotor et un stator muni d'enroulements, comprenant les étapes suivantes : (a) appliquer une séquence prédéterminée de sommes vectorielles de courants aux enroulements, la séquence de sommes vectorielles ayant des phases variables prédéterminées, et (b) détecter et mémoriser, pour chacune des sommes vectorielles de courant appliquée à l'étape (a), un mouvement du rotor et une direction de ce mouvement par rapport au stator, la méthode étant caractérisée en outre en ce qu'elle comprend les étapes suivantes:

(c) établir une fonction F1 par rapport à la phase, basée sur les mouvements et les directions détectés à l'étape (b), et établir une fonction F2 par rapport à la phase, basée sur les amplitudes de la séquence de sommes vectorielles ; et

(d) corréler mathématiquement une équation F résultant des fonctions F1 et F2 avec une équation prédéterminée pour obtenir une différence de phase, ainsi la machine est maintenant prête à être mise en opération à partir de la différence de phase.

La présente invention vise aussi un appareil pour démarrer une machine synchrone ayant un rotor et un stator muni d'enroulements, comprenant des moyens pour appliquer une séquence prédéterminée de sommes vectorielles de courants aux enroulements, la séquence de sommes vectorielles ayant des phases variables prédéterminées, et des moyens pour détecter et mémoriser, pour chacune des sommes vectorielles de courants appliquées, un mouvement du rotor et une direction de ce mouvement par rapport au stator, l'appareil étant caractérisé en ce qu'il comprend en outre :

- des moyens pour établir une fonction F1 par rapport à la phase, basée sur les mouvements et les directions desdits mouvements ;
- des moyens pour établir une fonction F2 par rapport à la phase, basée sur des amplitudes de la séquence de sommes vectorielles ; et
- des moyens pour corréler mathématiquement une équation F résultant des fonctions F1 et F2 avec une équation prédéterminée pour obtenir une différence de phase, ainsi la machine est maintenant prête à être mise en opération à partir de la différence de phase.

Les objets, avantages et autres caractéristiques de la présente invention deviendront plus apparents à la lecture de la description non limitative qui suit de modes de réalisation préférés montrés dans les dessins ci-joints.

## BREVE DESCRIPTION DES DESSINS

La figure 1 est un diagramme bloc montrant un appareil pour démarrer une machine synchrone selon la présente invention ;

La figure 2 est un autre diagramme bloc montrant un appareil pour démarrer une machine synchrone selon la présente invention ;

Les figures 3A, 3B et 3C montrent un algorithme illustrant une méthode pour démarrer une machine synchrone selon la présente invention ;

Les figures 4A, 4B et 4C montrent un diagramme bloc montrant avec plus de détails un élément montré à la figure 1 ;

La figure 5 est un diagramme de circuit montrant avec plus de détails une partie d'un élément montré à la figure 1 ; et

La figure 6 est une vue en coupe partielle d'une machine synchrone;

## DESCRIPTION DETAILLEE DES DESSINS

En se référent maintenant à la figure 1, il y est montré un appareil pour démarrer une machine synchrone 2 ayant un rotor (non montré) et un stator (non montré) munis d'enroulements (non montré). Le rotor et le stator muni d'enroulements sont montrés sur la figure 6. Une telle machine synchrone avec un rotor et un stator muni d'enroulements est bien connue dans l'art. Le rotor a une position initiale inconnue par rapport au stator.

Par exemple, la machine synchrone est un moteur-roue d'un véhicule électrique comme celui qui est montré dans le brevet américain N° 5.327.034. Comme on peut le comprendre facilement, aucun mouvement substantiel aléatoire du véhicule n'est permis durant le démarrage pour des raisons de sécurité.

L'appareil comprend des moyens pour appliquer 6, 8, 10 et 12 une séquence prédéterminée de sommes vectorielles de courants aux enroulements de la machine 2, la séquence de sommes vectorielles ayant des phases variables prédéterminées ; des moyens pour détecter et mémoriser 6, 14 et 16, pour chacune des sommes vectorielles de courants appliquée, un mouvement du rotor de la machine 2 et la direction de ce mouvement par rapport au stator ; des moyens pour établir 6 une fonction F1 par rapport à la phase, basée sur les mouvements et directions détectés ; des moyens pour établir 6 une fonction F2 par rapport à la phase, basée sur les amplitudes de la séquence de sommes vectorielles ; et des moyens pour établir une corrélation mathématique (6) entre une équation établie à partir des fonctions F1 et F2 avec une équation prédéterminée pour obtenir une différence de phase, ainsi la machine 2 est prête à être mise en opération à partir de cette différence de phase.

De préférence, les moyens pour détecter et mémoriser le mouvement du rotor de la machine 2 et la direction de ce mouvement par rapport au stator comprennent une unité de contrôle 6 munie d'une entrée 39 pour recevoir une commande, et d'un logiciel d'opération, un compteur bidirectionnel 16 ayant une sortie 36 branchée à l'entrée 37 de l'unité de contrôle 6, et un encodeur par incrément 14 ayant une entrée 18 reliée au rotor de la machine 2 et une sortie 20 branchée à une entrée 22 du compteur bidirectionnel 16. De préférence, les moyens pour établir la fonction F1, les moyens pour établir la fonction F2 et les moyens pour effectuer une corrélation mathématique font tous partie de l'unité de contrôle 6 qui est munie d'un logiciel d'opération approprié pour réaliser ces moyens.

De préférence, les moyens pour appliquer comprennent l'unité de contrôle 6 qui est munie d'un logiciel d'opération approprié ; un détecteur de courant 8 ayant des entrées 24 pour mesurer les courants appliqués aux enroulement de la machine 2 au moyen de conducteurs d'alimentation 4, et une sortie numérique 26 branchée à une entrée 27 de l'unité de contrôle 6 ; un convertisseur 10 ayant des sorties 28 pour appliquer les sommes vectorielles successives de courants aux enroulements, une entrée 11 pour recevoir une tension d'alimentation, et une entrée 30 pour recevoir des signaux de commande d'une sortie 29 de l'unité de contrôle 6 ; et un détecteur de tension 12 ayant une entrée 32 pour mesurer une tension d'alimentation Vdc appliquée au convertisseur 10, et une sortie numérique 34 branchée à une entrée 35 de l'unité de contrôle 6.

En se référent maintenant à la figure 3, il y est montré une méthode pour démarrer une machine synchrone ayant un rotor et stator muni d'enroulements, qui peut être réalisée par l'appareil décrit ci-dessus.

Cette méthode comprend les étapes suivantes (a) appliquer une séquence prédéterminée de sommes vectorielles de courants aux enroulements de la machine 2. La séquence de sommes vectorielles ayant des phases variables prédéterminées.

De préférence, l'étape (a) comprend les étapes suivantes (i) déterminer une position arbitraire du rotor de la machine 2 et mémoriser cette position arbitraire dans la variable MEMCNT; (ii) mémoriser une valeur de zéro dans la variable PVE qui représente une phase; (iii) mémoriser la valeur de K1 dans la variable AVE qui représente une amplitude, K1 ayant par exemple la valeur de 200; (iv) détecter la valeur de la tension appliquée au convertisseur 10 et mémoriser cette valeur dans la variable Vdc; (v) mesurer les valeurs des courants appliqués à la machine 2 et mémoriser ces valeurs dans les variables Ia, Ib et Ic, à ce stade ces valeurs sont nulles étant donné qu'aucun courant n'a encore été appliqué à la machine 2; (vi) calculer des valeurs de PWMa, PWMb et PWMc à partir des valeurs de PVE, AVE, Vdc, Ia, Ib et Ic; (vii) produire un signal de commande Cmd pour le convertisseur 10 à partir des valeurs PWMa, PWMb et PWMc; (x) mémoriser la valeur de PVE+K2 dans la variable PVE où K2 est une constante et a par exemple la valeur de $10^{-6}$, et mémoriser la valeur de AVE*K3 dans la variable AVE où K3 a une valeur alternant selon un intervalle de 200 µsec entre les valeurs de -1 et +1; et (xi) vérifier si la valeur de la variable PVE est plus grande que la valeur d'une constante K4 ayant par exemple la valeur de 360° et répéter les étapes (iv) à (xi) aussi longtemps que la condition de l'étape (xi) est négative.

De préférence, dans l'étape (a) la séquence prédéterminée de sommes vectorielles de courants appliquée aux enroulements a des phases variables prédéterminées qui varient d'une première valeur de phase prédéterminée à une seconde valeur de phase prédéterminée. Par exemple, la première valeur de phase prédéterminée est 0° et la seconde valeur de phase prédéterminée est 360° ce qui est la valeur de K4.

De préférence, dans l'étape (a) chaque somme vectorielle de la séquence de sommes vectorielles de courants est appliquée aux enroulements au moyen de signaux d'impulsion modulés en largeur.

La méthode comprend également l'étape suivante (b) détecter et mémoriser, pour chacune des sommes vectorielles de courants appliquée à l'étape (a), un mouvement du rotor et une direction de ce mouvement par rapport au stator. De préférence, l'étape (b) comprend, après l'étape (vii) et avant l'étape (xi), l'étape suivante (viii) détecter la position du rotor et mémoriser cette position dans la variable CNT.

La méthode comprend également l'étape suivante (c) établir une fonction F1 qui représente les variations des mouvements du rotor ainsi que les différentes directions de ce mouvement, par rapport à la phase des sommes vectorielles de courants, et établir une fonction F2 qui représente les variations des amplitudes des sommes vectorielles de courants par rapport à la phase des sommes vectorielles de courants. De préférence, l'étape (c) comprend, après l'étape (vii) et avant l'étape (xi), l'étape suivante (ix) mémoriser, pour chaque valeur de phase des sommes vectorielles de courants, des fonctions F1 et F2 où F1=CNT-MEMCNT et F2=AVE.

Lorsque la condition de l'étape (xi) est positive, cela veut dire que la collecte de données est terminée. En conséquence, la machine 2 peut être arrêtée. L'arrêt de la machine 2 comprend les étapes suivantes (xii) mémoriser une valeur de zéro dans la variable AVE; (xiii) mesurer la valeur de la tension appliquée au convertisseur 10 et mémoriser cette valeur dans la variable Vdc; (xiv) mesurer les valeurs de courants appliqués à la machine 2 et mémoriser ces valeurs dans les variables Ia, Ib et Ic; (xv) calculer les valeurs de PWMa, PWMb et PWMc à partir des valeurs de PVE, AVE, Vdc, Ia, Ib et Ic; et (xvi) produire un signal de commande Cmd pour le convertisseur 10 à partir des valeurs PWMa, PWMb et PWMc. La machine est alors arrêtée.

La méthode comprend également l'étape suivante (d) effectuer une corrélation mathématique entre une équation F établie à partir des fonctions F1 et F2 avec une équation prédéterminée pour obtenir une différence de phase qui est mémorisée dans une variable MPVE. La machine est alors maintenant prête à être mise en opération à partir de cette différence de phase. De préférence, l'étape (d) comprend les étapes suivantes (xvii) calculer la deuxième dérivée F1" de la fonction F1 où:

$$F1'' = \frac{d(d(F1))}{d\theta d\theta}$$

et (xiv) normaliser la fonction F1" au moyen de la fonction F2 pour obtenir l'équation F qui résulte des fonctions F1 et F2 au moyen de l'équation suivante: F=F1"*F2.

De préférence, la corrélation de l'étape (d) est faite au moyen de la méthode dès moindres carrés. L'équation prédéterminée avec laquelle la corrélation de l'étape (d) est effectuée définit un sinus et est représentée par l'équation suivante AMPL*Sin($\theta$ + ladite différence de phase) où AMPL est représentatif d'une amplitude et $\theta$ est représentatif des phases variables.

En se référant maintenant à la figure 2, on remarque que l'encodeur par incrément 14 a une seconde sortie 40 pour générer un signal d'index 42; et que le compteur bidirectionnel 16 a une entrée de charge 44 pour recevoir le signal d'index. Ainsi le signal d'index est utilisé comme un signal de charge pour confirmer la position absolue du rotor par rapport au stator lorsque le moteur synchrone est en opération.

En se référant maintenant à la figure 4, il y est montré un mode de réalisation préférentiel de l'unité de contrôle 6 pour calculer les valeurs PWMa, PWMb et PWMc montrées aux figures 1 et 2. Les valeurs de courant de commande Iac, Ibc, et Icc sont calculées à partir des valeurs AVE et PVE obtenues à partir des entrées 37 et 39. Les valeurs de force contre-électromotrice FEMa, FEMb et FEMc sont calculées à partir des valeurs PVE, $\theta$ et $\psi d$ où $\psi d$ est une constante représentative d'une force magnétomotrice. Les valeurs d'erreur ERa, ERb et ERc sont calculées à partir des valeurs de commande de courant Iac, Ibc et Icc et des valeurs de courant Ia, Ib et Ic. Les valeurs de REa, REb et REc sont calculées au moyen d'un algorithme PID (Proportionnel Intégral Différentiel) qui utilise des valeurs de FEMa, FEMb et FEMc. Les valeurs de PWMa, PWMb et PWMc sont calculées à partir des valeurs de Vdc, REa, REb et REc et sont appliquées à la sortie 29.

En se référant maintenant à la figure 5, il y est montré un mode de réalisation préférentiel du convertisseur 10 montré aux figures 1 et 2. Le convertisseur de puissance 10 est utilisé pour appliquer des courants à la machine synchrone 2 (montré aux figures 1 et 2) via les sorties 28. Six interrupteurs de puissance 80 d'un type IGBT sont branchés à l'alimentation Vdc via l'entrée 11. Les interrupteurs de puissance ont des entrées 81 pour recevoir les signaux de commande à partir des sorties des pilotes de gâchette 83. Ces pilotes de gâchette 83 ont des entrées 78 pour recevoir les signaux de commande PWMa, PWMb et PWMc via l'entrée 30. Un condensateur de puissance 82 est branché dans l'entrée 11 pour filtrer l'alimentation Vdc.

En se référant maintenant à la figure 6, il y est montré une vue en coupe partielle de la machine synchrone. Les enroulements de phase A, B et C sont montés sur le stator 92. Des aimants 91 sont montés sur le rotor 93. La valeur de MPVE est la valeur de l'angle $\alpha$ entre la position vectorielle 94 du rotor 93 et la position vectorielle 95 du stator 92. Les moyens pour détecter le mouvement du rotor 93 ainsi que la direction de ce mouvement par rapport au stator 92 comprennent un anneau d'encodage 97 coopérant avec une tête de lecture d'encodage fixe 98.

Bien que la présente invention ait été précédemment expliquée par le biais de réalisations préférées de celle-ci, il doit être précisé que toute modification à ces réalisations préférées, à l'intérieur du cadre des revendications jointes, n'est pas considérée changer ni altérer la nature et la portée de la présente invention.

Les réalisations de l'invention, au sujet desquelles un droit exclusif de propriété ou de privilège est revendiqué, sont définies comme il suit :

## Revendications

1. Méthode pour démarrer une machine synchrone ayant un rotor (93) et un stator (92) muni d'enroulements, comprenant les étapes suivantes : (a) appliquer une séquence prédéterminée de sommes vectorielles de courants aux enroulements, la séquence de sommes vectorielles ayant des phases variables prédéterminées, et (b) détecter et mémoriser, pour chacune des sommes vectorielles de courants appliquée à l'étape (a), un mouvement du rotor (93) et une direction de ce mouvement par rapport au stator (92), la méthode étant caractérisée en outre en ce qu'elle comprend les étapes suivantes :

(c) établir une fonction F1 par rapport à la phase, basée sur les mouvements et les directions détectés à l'étape (b), et établir une fonction F2 par rapport à la phase, basée sur les amplitudes de la séquence de sommes vectorielles ; et
(d) corréler mathématiquement une équation F résultant des fonctions F1 et F2 avec une équation prédéterminée pour obtenir une différence de phase, ainsi la machine (2) est maintenant prête à être mise en opération à partir de la différence de phase.

**2.** Méthode selon la revendication 1, caractérisée en ce que, dans l'étape (a), la séquence prédéterminée de sommes vectorielles de courants appliquée aux enroulements a des phases variables prédéterminées qui varient d'une première valeur de phase prédéterminée à une seconde valeur de phase prédéterminée.

**3.** Méthode selon la revendication 1, caractérisée en ce que l'étape (d) comprend les étapes suivantes :

(i) calculer la deuxième dérivée F1" de la fonction F1 ; et
(ii) normaliser la fonction F1" au moyen de la fonction F2 pour obtenir l'équation F résultant des fonctions F1 et F2.

**4.** Méthode selon la revendication 1, caractérisée en ce que dans l'étape (a) chaque somme vectorielle de la séquence de sommes vectorielles de courants est appliquée aux enroulements au moyen de signaux d'impulsion modulés en largeur.

**5.** Méthode selon la revendication 1, caractérisée en ce que la corrélation de l'étape (d) est faite au moyen d'une méthode des moindres carrés; et l'équation prédéterminée définit un sinus qui est représenté par l'équation suivante AMPL*Sin($\theta$ + la différence de phase) où AMPL est une amplitude donnée, et $\theta$ est représentatif des phases variables.

**6.** Méthode selon la revendication 2, caractérisée en ce que dans l'étape (a) la première valeur de phase prédéterminée est zéro.

**7.** Appareil pour démarrer une machine synchrone (2) ayant un rotor (93) et un stator (92) muni d'enroulements, comprenant des moyens (6,8,10,12) pour appliquer une séquence prédéterminée de sommes vectorielles de courants aux enroulements, la séquence de sommes vectorielles ayant des phases variables prédéterminées, et des moyens (6,14,16) pour détecter et mémoriser, pour chacune des sommes vectorielles de courants appliquée, un mouvement du rotor (93) et une direction de ce mouvement par rapport au stator (92), l'appareil étant caractérisé en ce qu'il comprend en outre :

. des moyens (6) pour établir une fonction F1 par rapport à la phase, basée sur les mouvements et les directions desdits mouvements ;
. des moyens (6) pour établir une fonction F2 par rapport à la phase, basée sur des amplitudes de la séquence de sommes vectorielles ; et
. des moyens (6) pour corréler mathématiquement une équation F résultant des fonctions F1 et F2 avec une équation prédéterminée pour obtenir une différence de phase, ainsi la machine (2) est maintenant prête à être mise en opération à partir de la différence de phase.

**8.** Appareil selon la revendication 7, caractérisé en ce que les moyens (6,14,16) pour détecter et mémoriser le mouvement du rotor (93) et la direction de ce mouvement par rapport au stator (92) comprennent une unité de contrôle (6) munie d'un logiciel d'opération, un compteur bidirectionnel (16) ayant une sortie (36) reliée à l'unité de contrôle (6), et un encodeur par incrément (14) ayant une entrée (18) reliée au rotor (93) et une sortie (20) branchée à une entrée (22) du compteur bidirectionnel (16).

**9.** Appareil selon la revendication 7, caractérisé en ce que les moyens (6) pour établir la fonction F1, les moyens (6) pour établir la fonction F2 et les moyens (6) pour effectuer une corrélation mathématique entre l'équation F résultant des fonctions F1 et F2 font tous partie d'une unité de contrôle (6) munie d'un logiciel d'opération.

**10.** Appareil selon la revendication 7, caractérisé en ce que les moyens (6,8,10,12) pour appliquer comprennent :

. une unité de contrôle (6) munie d'un logiciel d'opération ;
. un détecteur de courant (8) ayant des entrées (24) pour détecter les courants appliqués aux enroulements et une sortie numérique (26) branchée à une entrée (27) de l'unité de contrôle (6) ;
. un convertisseur (10) ayant des sorties (28) pour appliquer la séquence prédéterminée de sommes vectorielles de courants aux enroulements, et une entrée (30) pour recevoir des signaux de commande de l'unité de contrôle (6) ; et
. un détecteur de tension (12) ayant des entrées (32) pour mesurer la tension d'alimentation appliquée au convertisseur (10) et une sortie numérique (34) branchée à une entrée (35) de l'unité de contrôle (6).

**11.** Appareil selon la revendication 8, caractérisé en ce que :

- l'encodeur par incrément (14) a une seconde sortie (40) pour produire un signal d'index (42) ; et
- le compteur directionnel (16) a une entrée (44) de charge pour recevoir le signal d'index (42), ainsi le signal d'index (42) est utilisé comme signal de charge pour confirmer la position absolue du rotor (93) par rapport au stator (92) lorsque la machine synchrone (2) est en opération.

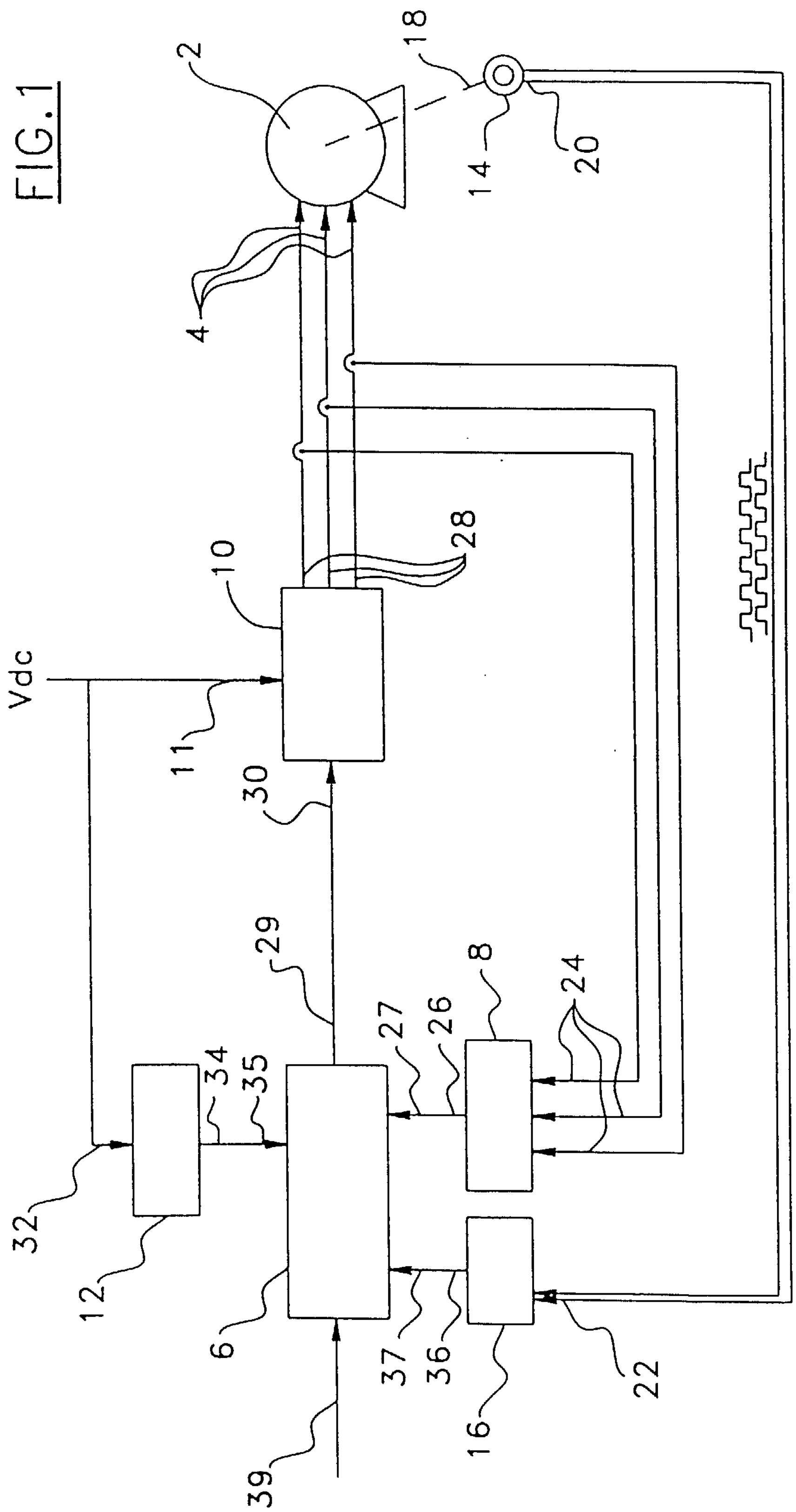


FIG.1

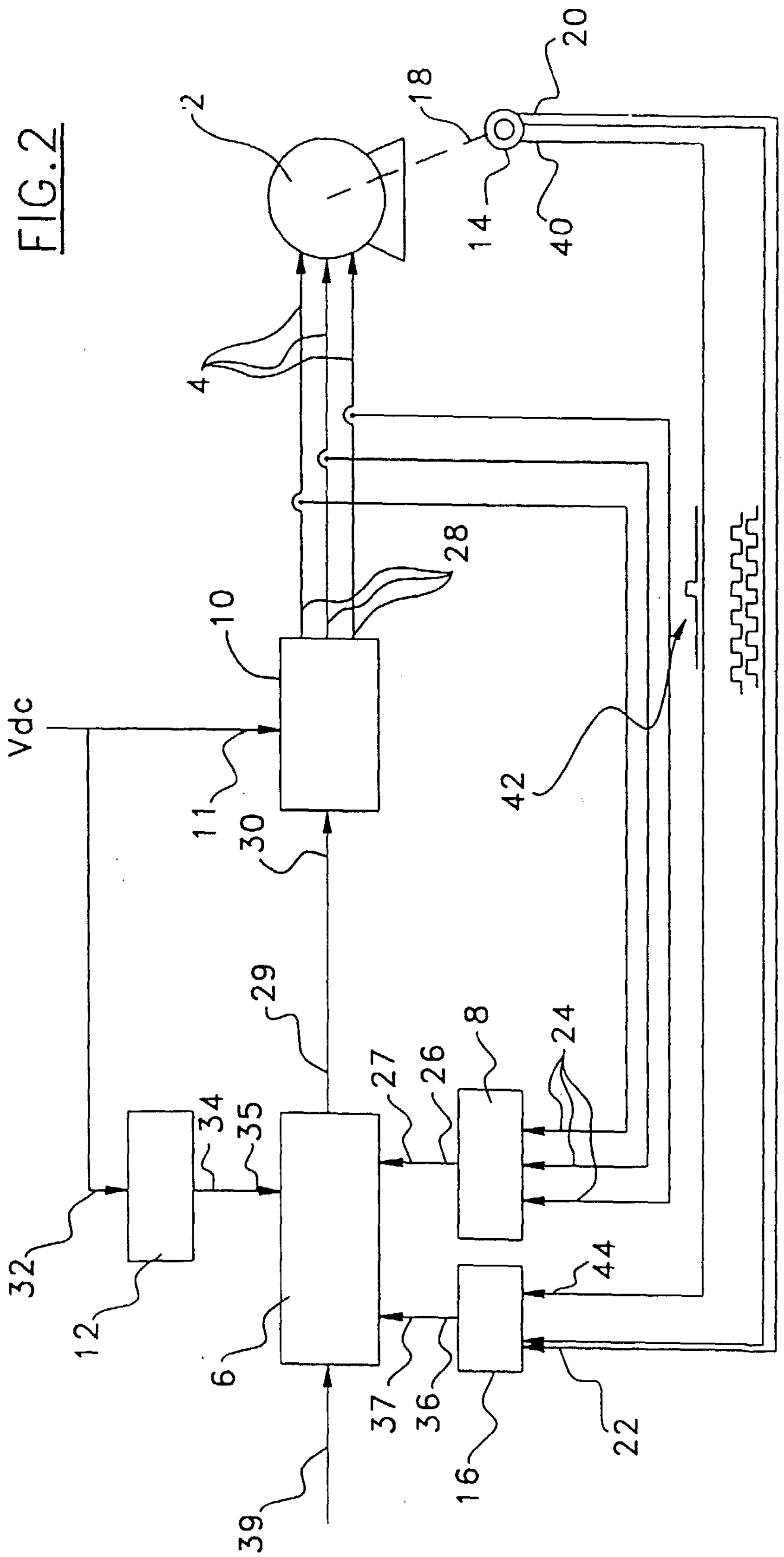
2
4
6
8
10
11
12
14
16
18
20
22
24
26
27
28
29
30
32
34
35
36
37
39
40
42
44
Vdc

FIG. 2

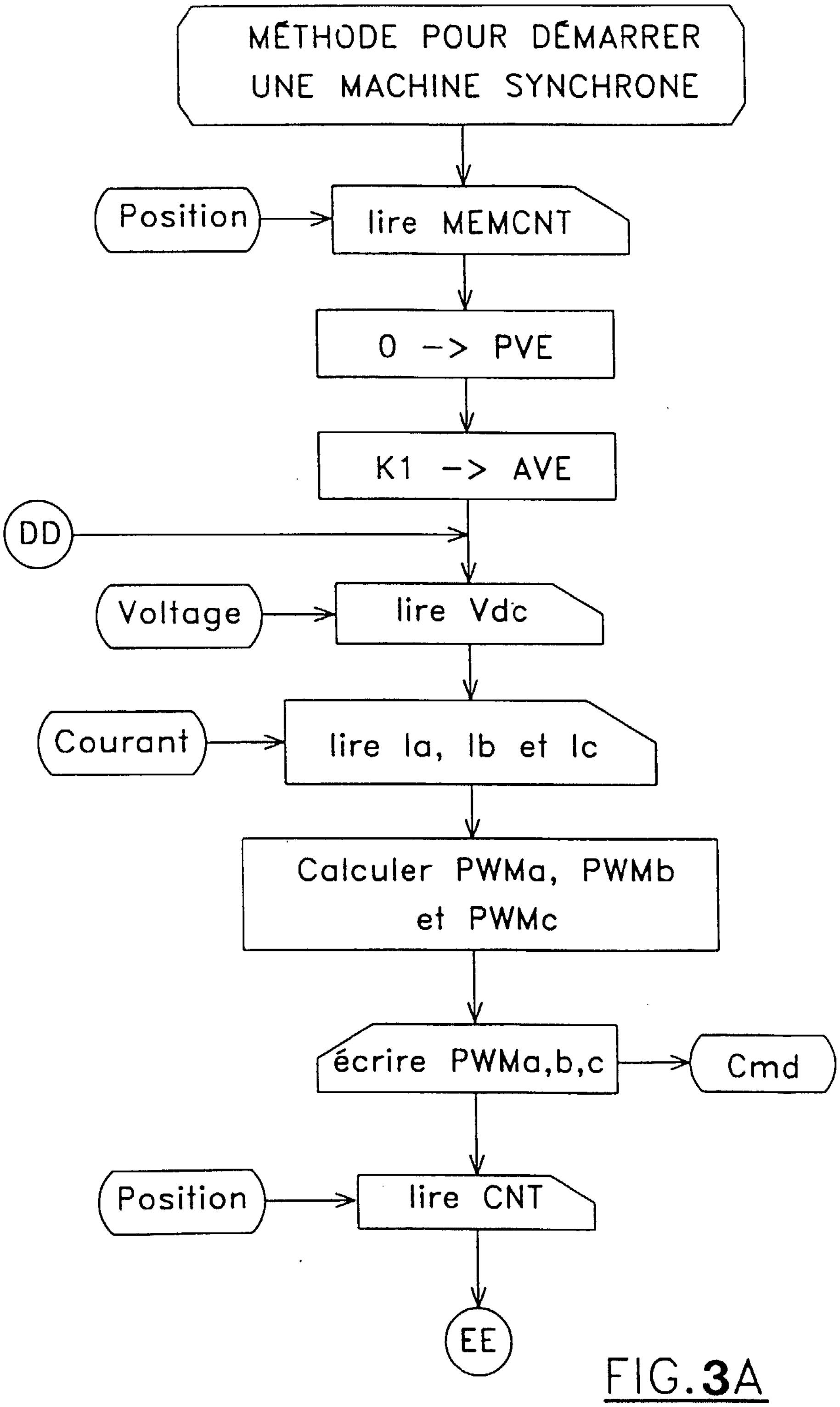
MÉTHODE POUR DÉMARRER UNE MACHINE SYNCHRONE
Position
lire MEMCNT
0 -> PVE
K1 -> AVE
DD
Voltage
lire Vdc
Courant
lire Ia, Ib et Ic
Calculer PWMa, PWMb et PWMc
écrire PWMa,b,c
Cmd
Position
lire CNT
EE

FIG.3A

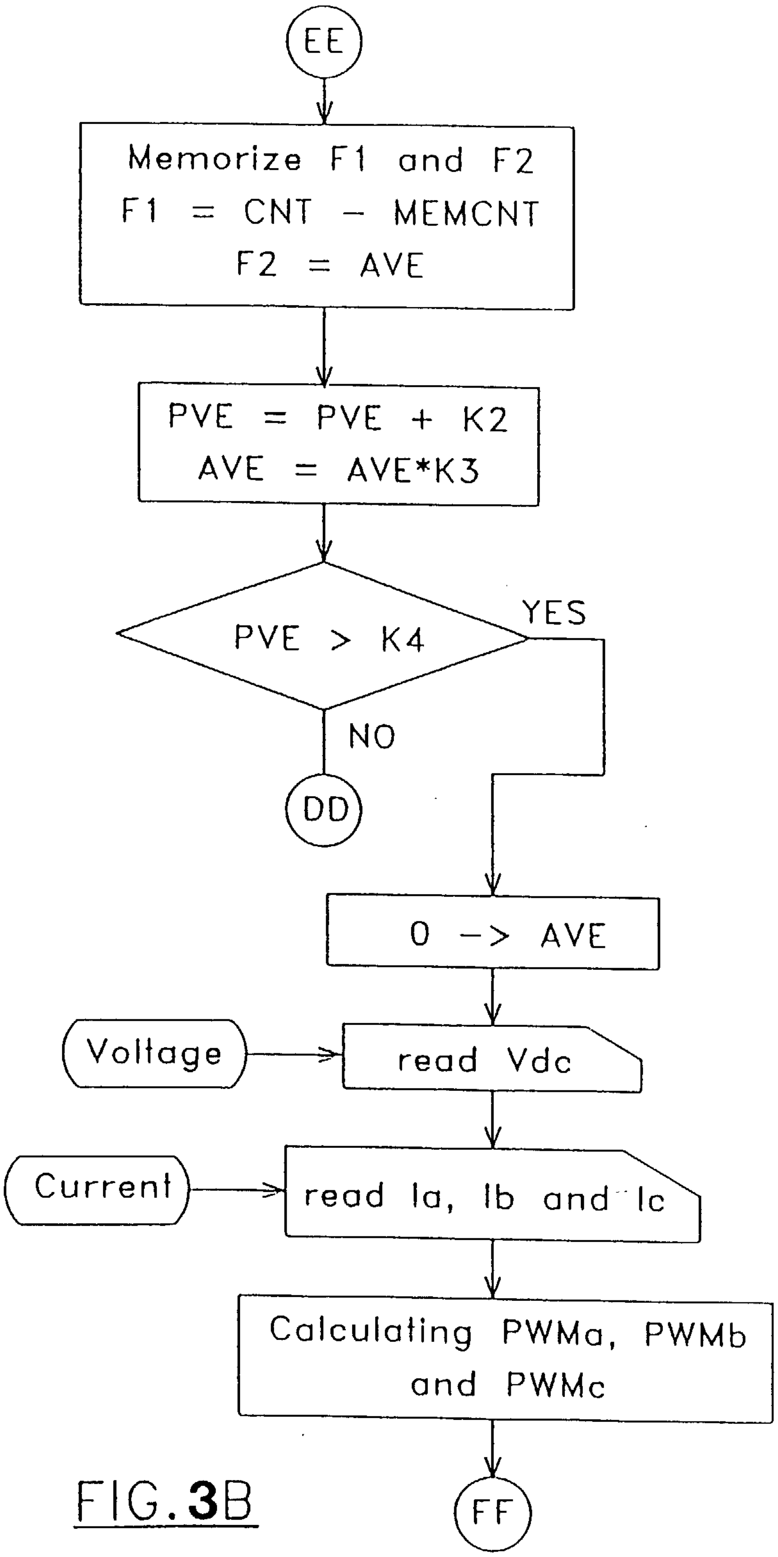
EE
Memorize F1 and F2
F1 = CNT − MEMCNT
F2 = AVE
PVE = PVE + K2
AVE = AVE*K3
PVE > K4
YES
NO
DD
0 −> AVE
Voltage
read Vdc
Current
read Ia, Ib and Ic
Calculating PWMa, PWMb and PWMc
FF

FIG.3B

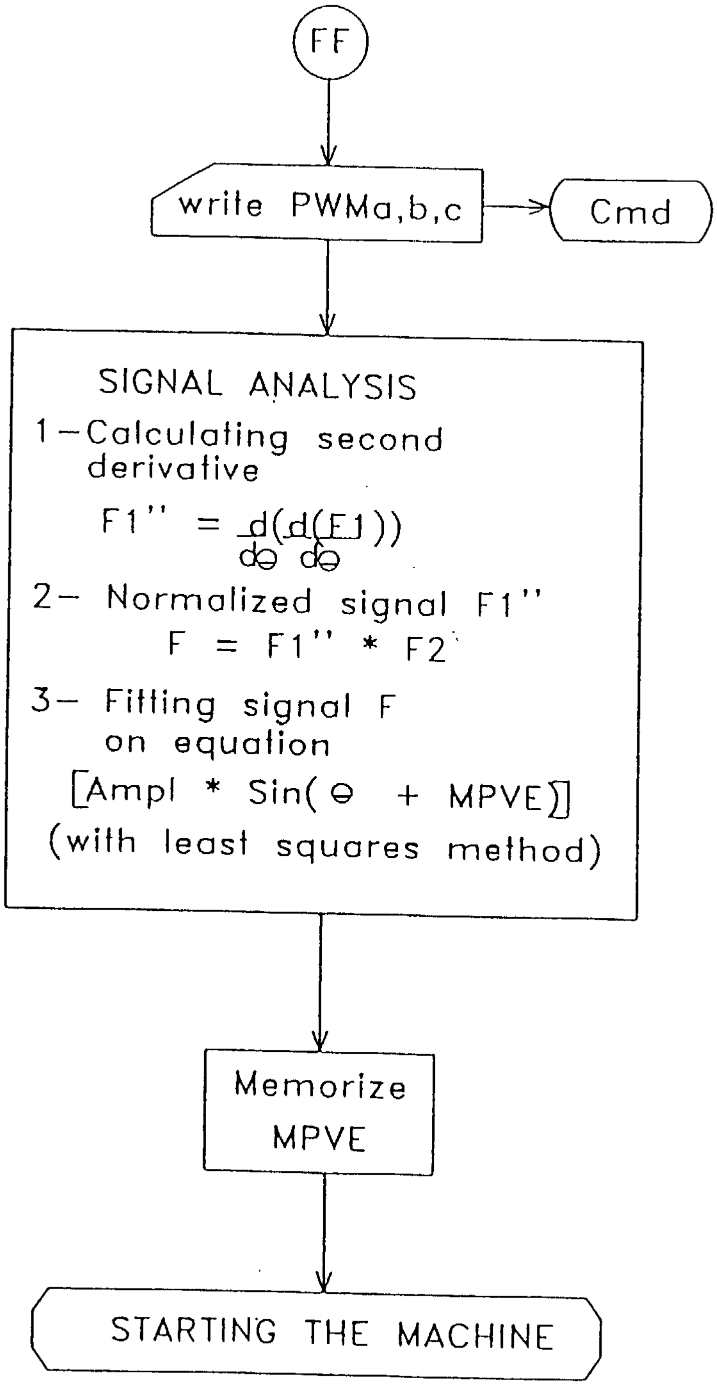
FF
write PWMa,b,c
Cmd
SIGNAL ANALYSIS
1 – Calculating second derivative
F1'' = d(d(F1)) / dθ dθ
2 – Normalized signal F1''
F = F1'' * F2
3 – Fitting signal F on equation
[Ampl * Sin(θ + MPVE)]
(with least squares method)
Memorize MPVE
STARTING THE MACHINE

FIG. 3C

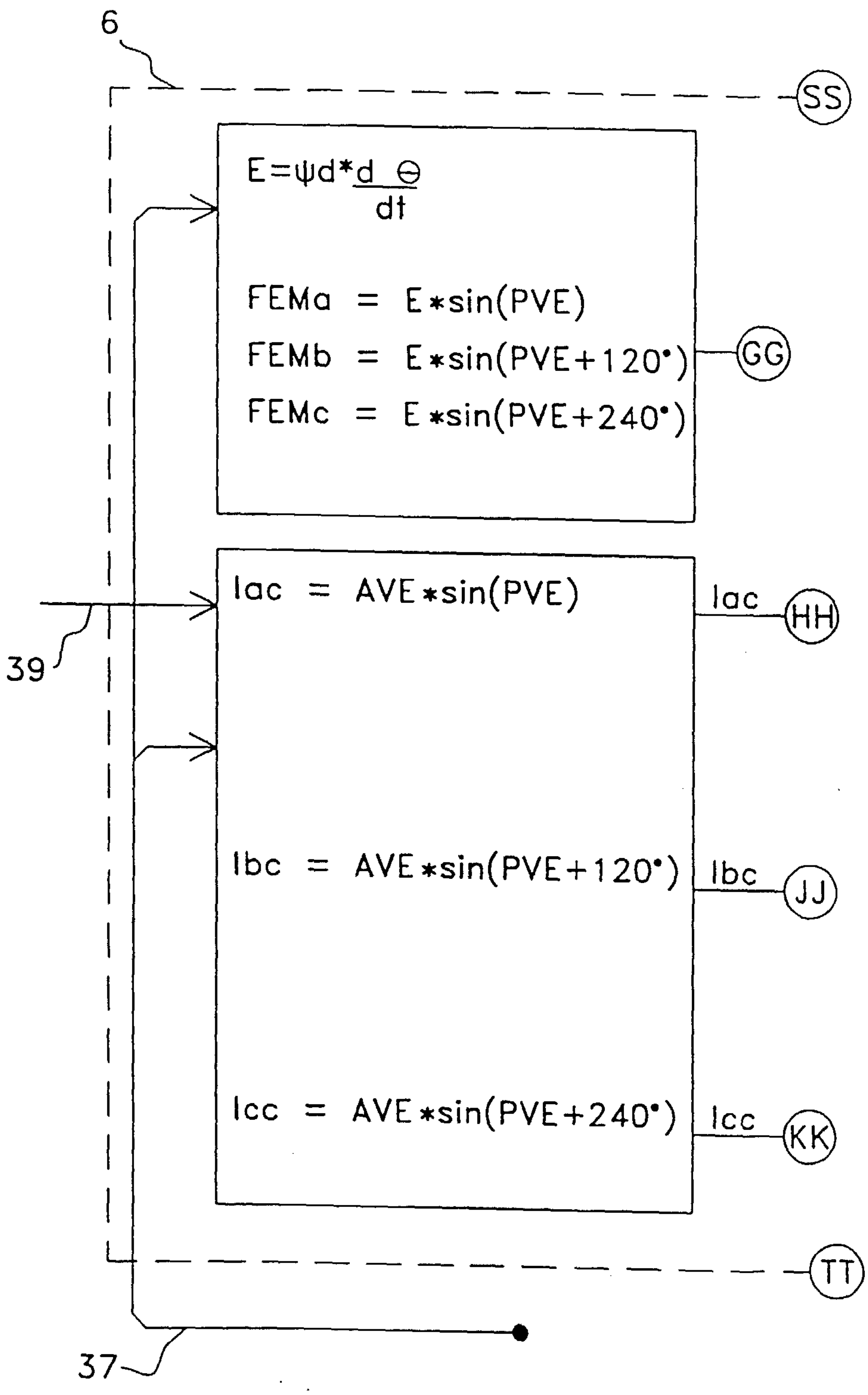
6
SS
E=ψd*d Θ / dt
FEMa = E*sin(PVE)
FEMb = E*sin(PVE+120°)
FEMc = E*sin(PVE+240°)
GG
Iac = AVE*sin(PVE)
Iac
HH
39
Ibc = AVE*sin(PVE+120°)
Ibc
JJ
Icc = AVE*sin(PVE+240°)
Icc
KK
TT
37

FIG.4A

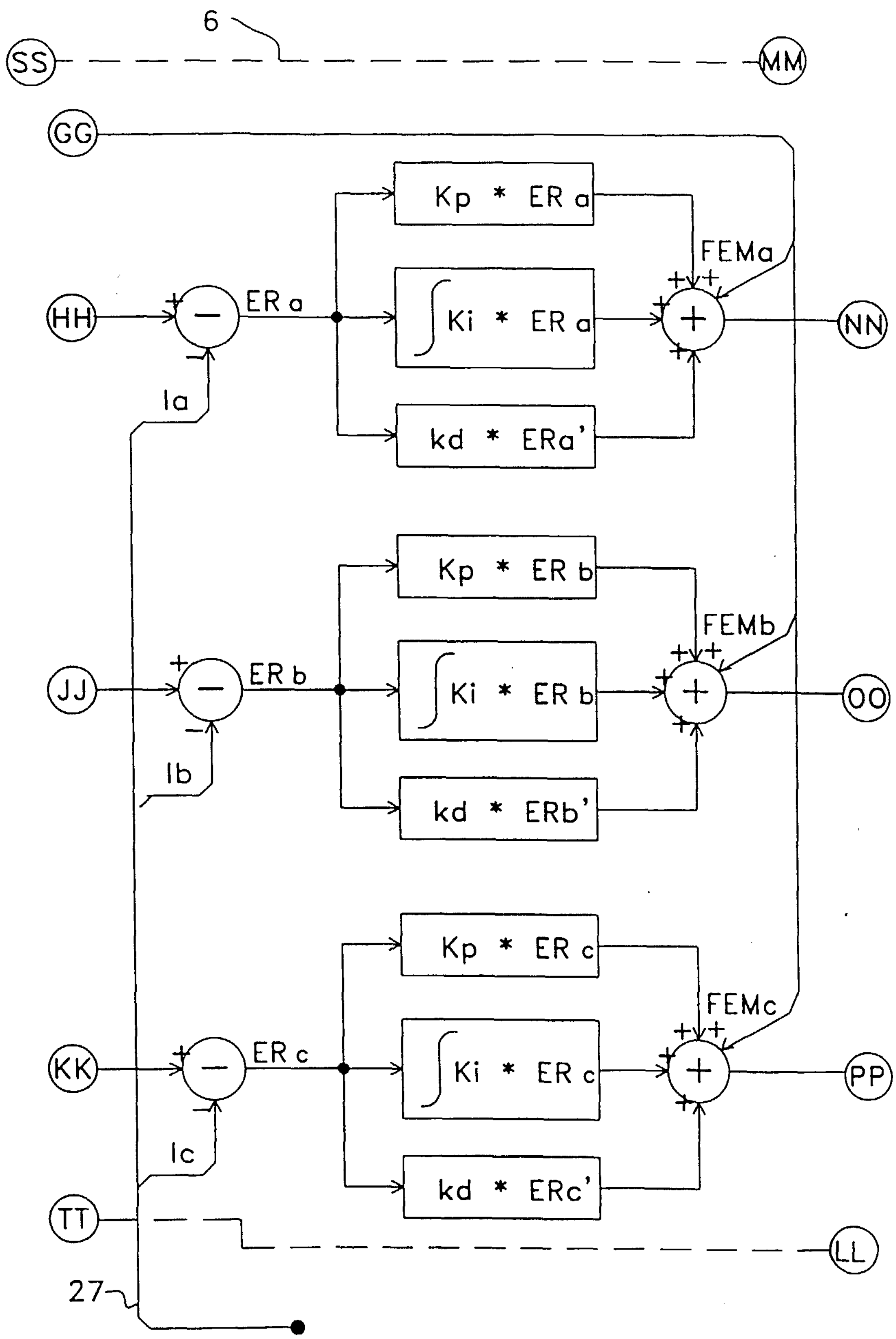
6
SS
MM
GG
Kp * ER a
FEMa
HH
ER a
Ki * ER a
NN
Ia
kd * ERa'
Kp * ER b
FEMb
JJ
ER b
Ki * ER b
OO
Ib
kd * ERb'
Kp * ER c
FEMc
KK
ER c
Ki * ER c
PP
Ic
kd * ERc'
TT
LL
27

FIG.4B

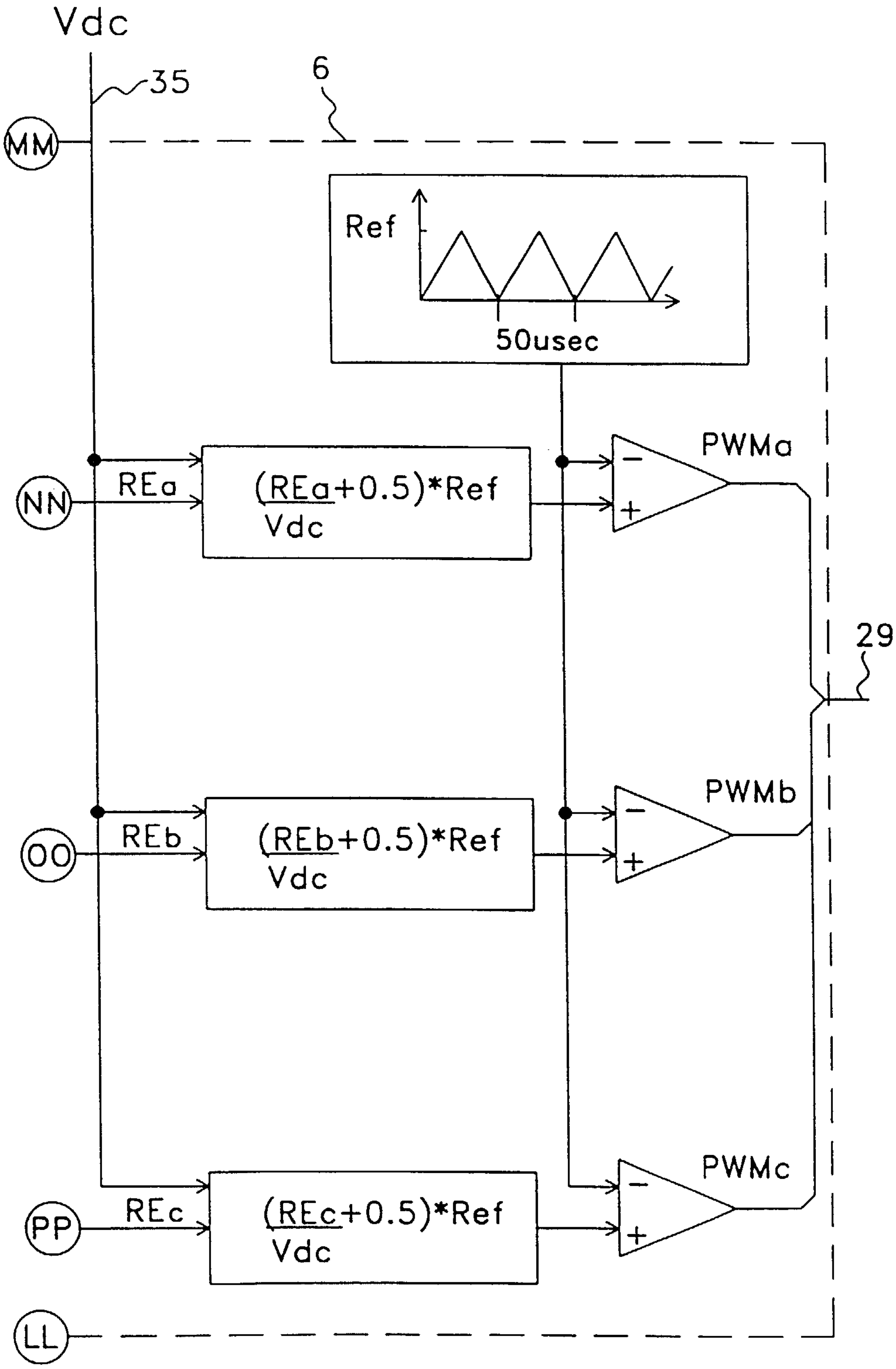
Vdc
35
6
MM
Ref
50usec
NN
REa
(REa+0.5)*Ref
Vdc
PWMa
29
OO
REb
(REb+0.5)*Ref
Vdc
PWMb
PP
REc
(REc+0.5)*Ref
Vdc
PWMc
LL

FIG. 4C

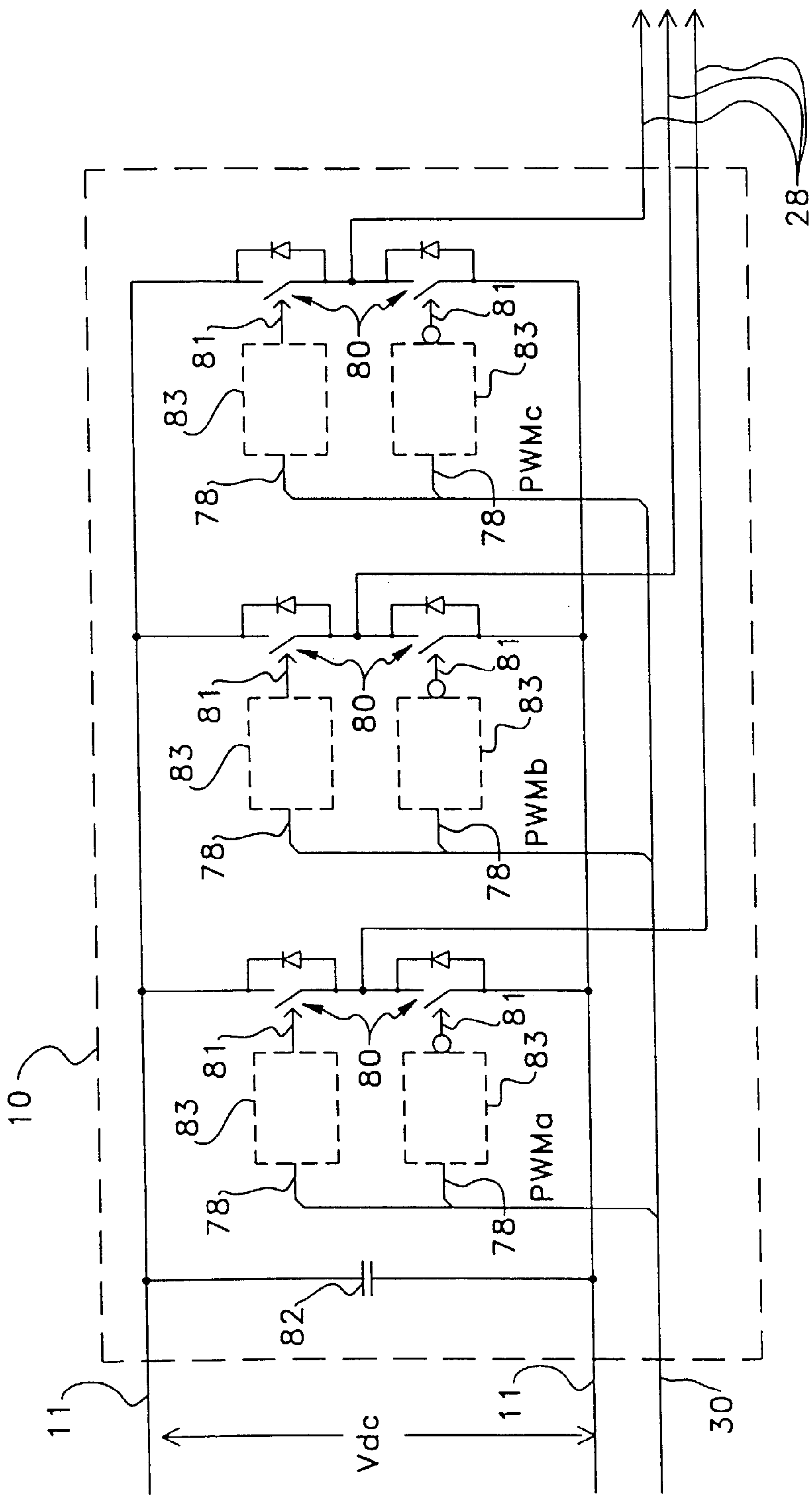


FIG.5

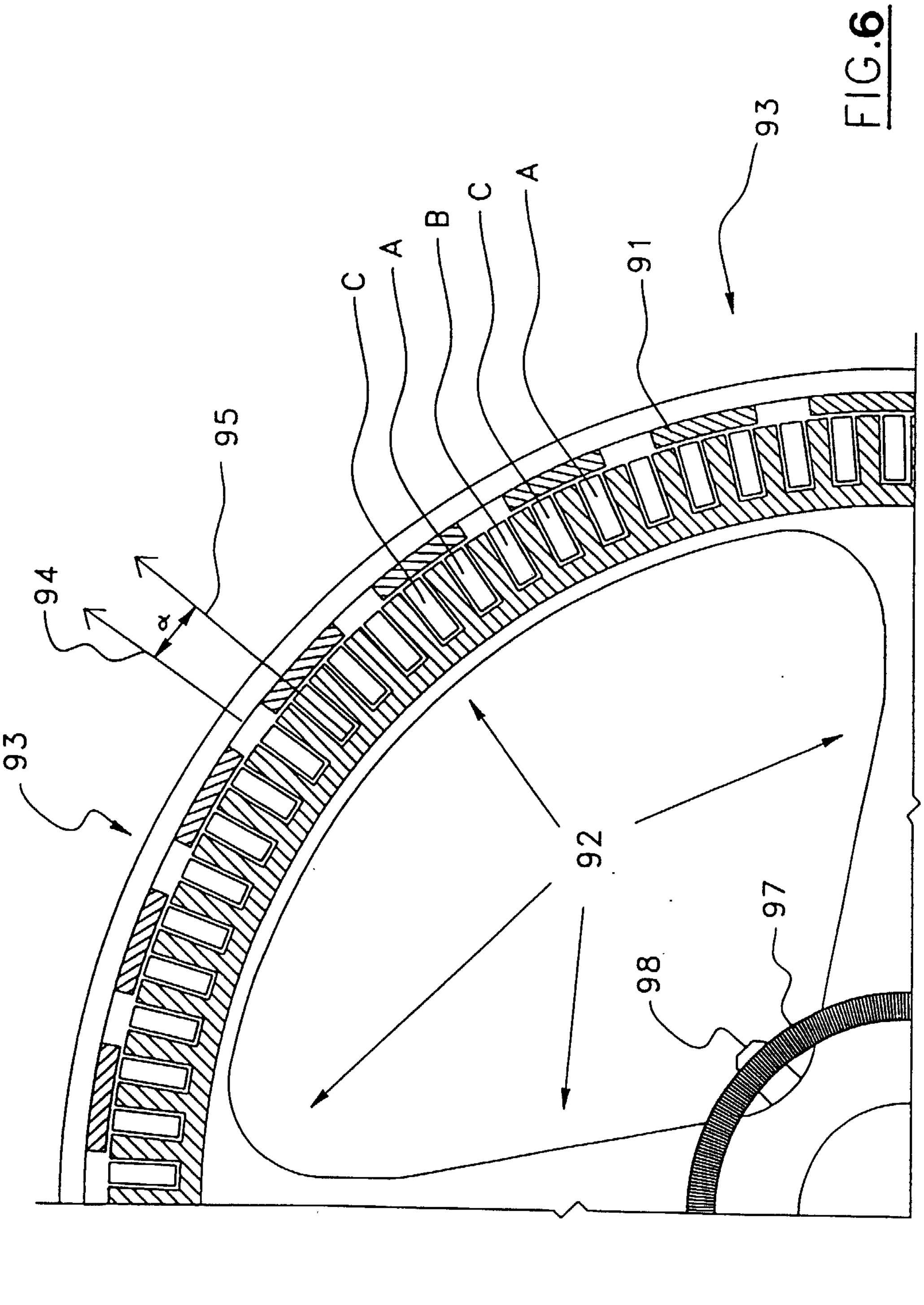


FIG.6